# EUROPÄISCHE PATENTSCHRIFT

(11) **EP 0 494 277 B1**
(45) Veröffentlichungstag und Bekanntmachung des Hinweises auf die Patenterteilung: **22.02.1995**
(21) Anmeldenummer: 91911827.3
(22) Anmeldetag: 08.07.1991
(51) Int. Cl.: B60B 1/04, B60B 1/02, B60B 21/02

(54) **FELGE FÜR EIN GESPEICHTES FAHRRAD-HINTERRAD**
RIM FOR A SPOKED REAR BICYCLE WHEEL
JANTE POUR ROUE A RAYONS ARRIERE DE BICYCLETTE

(30) Priorität: 25.07.1990 CH 2463/90
(43) Veröffentlichungstag der Anmeldung: 15.07.1992
(73) Patentinhaber: Krampera, Jiri, CH-8003 Zürich (CH)
(72) Erfinder: Krampera, Jiri, CH-8003 Zürich (CH)
(74) Vertreter: Frei, Alexandra Sarah
(86) Internationale Anmeldenummer: CH9100146
(87) Internationale Veröffentlichungsnummer: WO9201574

(56) Entgegenhaltungen:
- DE-C- 540 433
- DE-U- 8 912 606
- FR-A- 628 057
- FR-A- 818 460
- FR-A- 1 128 981
- FR-A- 2 387 802
- GB-A- 2 065 572
- US-A- 4 531 754

## Beschreibung

Die Erfindung betrifft eine Fahrradfelge, aus Metall welche für ein gespeichtes Fahrrad - Hinterrad verwendbar ist.

Ein herkömmliches Fahrrad - Hinterrad besteht aus einer Hinterradnabe, an deren einen Seite ein Zahnkranzsatz für die antreibende Kette angebracht ist und die Nabenflansche an beiden Seiten der Nabe mit einer herkömmlichen einen Reifen tragenden Felge durch Drahtspeichen unter Spannung verbunden sind. Die Hinterradfelge ist die gleiche, welche auch am Vorderrad des gegebenen Fahrrades verwendet wird.

Der Zahnkranzsatz verursacht in dem herkömmlichen Hinterrad eine unerwünschte seitliche Versetzung der Mittelebene beider Nabenflansche von der Felgenmittelebene in Richtung zur Zahnkranzgegenseite. Bedingt durch diese etwa 5 bis 10 Millimeter grosse Versetzung, welche als sogenannte Schüsseltiefe (amount of dish) bekannt ist, ist die Spannung der zahnkranzseitigen Speichen grösser als die der zahnkranzgegenseitigen Speichen in einem Masse, dass die Standfestigkeit des Hinterrades stark vermindert wird. Dies ist das grösste, in den Fachkreisen seit Jahrzehnten bekannte Problem am Fahrrad - Hinterrad. Es ist darum wünschbar, die Speichenspannungen an beiden Hinterradseiten soweit wie möglich auszugleichen.

Die französische Patentanmeldung Nr. 76 22859 löst diese Aufgabe beispielsweise durch eine seitliche Versetzung der Mittelebene beider Nabenflansche in dem Hinterrad wieder zurück in Richtung zur Zahnkranzseite wobei die Lage der Felge in der Rahmenmittelebene beibehalten bleibt. Beide Nabenflansche sind dann von der Felgenmittelebene gleich weit entfernt und die Speichenspannungen an beiden Radseiten sind somit vollkommen ausgeglichen - wie es beispielsweise bei jedem Fahrrad - Vorderrad der Fall ist. Die Verbreitung dieses Systems verhinderte bislang ein dazu notwendiger aber aufwendiger Fahrradrahmen mit einem asymmetrischen hinteren Rahmenteil.

In der letzten Zeit wurden durch die Fachpresse neuartige und sehr teure Felgen aus Carbon vorgestellt. Die hohe Verdrehungssteifigkeit des Felgen-profils ermöglicht in der Hinterradfelge eine seitlich versetzte Verankerung der Speichen von der Felgenmitte in Richtung zur Zahnkranzgegenseite im Unterschied zu der Vorderradfelge, in welcher eine herkömmliche symmetrische Verankerung der Speichen vorhanden ist. Bei dem Hinterrad werden durch diese Massnahme - im Unterschied zu der erwähnten Lösung - die ungleichen Speichenspannungen an beiden Radseiten in den meisten Fällen nur teilweise ausgeglichen, dafür aber kann ein mit dieser Felge ausgerüstetes Hinterrad in jedem herkömmlichen symmetrischen Fahrradrahmen verwendet werden. Unbedingte Voraussetzung für diese Lösung ist aber eine enorm steife Felge.

So zeigt beispielsweise das Deutsche Gebrauchsmuster G 89 12 606.8 eine Felge mit seitlich versetzter Verankerung der Speichen. Sie löst die Aufgabe, die Laufeigenschaften und die Stabilität eines sich drehenden Speichenrads zu verbessern und dabei dessen Strömungswiderstand zu verringern. Dazu werden die Speichen so verkürzt, dass sie nicht mehr in den Bereich der höchsten Speichengeschwindigkeit reichen und die Distanz zur Felge wird durch einen angeformten scheibenförmigen Ansatz zur Verankerung der kürzeren Speichen überbrückt. Ein Rad mit solch einem Scheibenansatz würde aus Metall gefertigt zu schwer, es sollte deswegen besser aus Carbon gefertigt werden. Eine Felge dieser Art weist mehr die Verdrehungssteife und Stabilität eines Scheibenrades auf als die einer Felge.

Es ist Aufgabe der vorliegenden Erfindung eine aus Metall bestehende Felge für das Fahrrad-Hinterrad zu schaffen, welche aus einem herkömmlichen, billigen Material hergestellt ist, ein durchschnittliches Gewicht hat und trotzdem die mit der seitlichen Versetzung der Speichenverankerung zusammenhängenden erhöhten Belastungen gut erträgt. Die Aufgabe wird durch die Hinterradfelge mit den kennzeichnenden Merkmalen des Patentanspruches 1 gelöst. Diese Felge mit den seitlich versetzten Felgenlöchern für die Speichennippel hat einen bezüglich der Felgenmittelebene asymmetrischen Querschnitt.

Nachfolgend wird anhand der Zeichnungen erst die Problematik am Fahrrad - Hinterrad bei Verwendung einer herkömmlichen Felge erklärt und nachher verschiedene Ausführungsformen der Erfindung im einzelnen erläutert. In schematischen Darstellungen zeigen:
- Fig. 1: eine herkömmliche Fahrradfelge mit symmetrischer Speichenverankerung in einer Schnittansicht nach dem Stand der Technik;
- Fig. 2: eine Schnittansicht der Felge wie in Fig. 1, jedoch mit asymmetrischer Speichenverankerung nach dem neuesten Stand der Technik;
- Fig. 3: eine Felge wie in Fig. 2 im Schnitt in Vergrösserung;
- Fig. 4: eine Felge wie in Fig. 3, jedoch nach der ersten Ausführungsform der Erfindung;
- Fig. 5: schematische verkleinerte Schnittansicht eines ganzen gespeichten Hinterrades mit der Felge gemäss Fig. 4 mit Speichen ohne Spannung;
- Fig. 6: eine Schnittansicht wie in Fig. 5, jedoch mit gespannten Speichen;
- Fig. 7-11: verschiedene Ausführungsformen der erfindungsgemässen Felgen im Schnitt;
- Fig. 12: eine Ansicht der Felge aus der Fig. 11 in Richtung zur Radachse;
- Fig. 13: eine erfindungsgemässe Felge mit axialen Speichenlöchern im Schnitt.

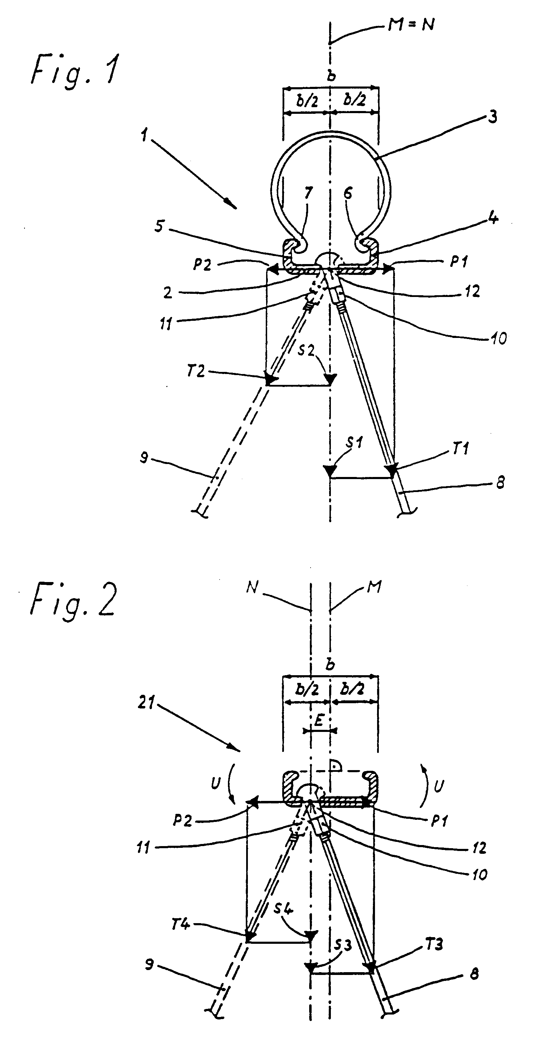

Fig. 1 zeigt eine herkömmliche Felge 1 mit einem bezüglich der Felgenmittelebene M symmetrischen Querschnitt und einer symmetrischen Speichenverankerung in der Mitte des einfachen Felgenbodens 2 als Teil eines nicht dargestellten Fahrrad -Hinterrades nach dem Stand der Technik. Solche Felgen werden in gleicher Ausführung für das Vorder - sowie für das Hinterrad eines Fahrrades verwendet. Die Felge 1 trägt einen Reifen 3, dessen zentrische Lage auf der Felge 1 durch die auf den Felgenrändern 4, 5 ausgebildeten Haken 6,7 gesichert ist. Die zahnkranzseitigen Speichen 8 verbinden die Felge 1 mit dem nicht dargestellten zahnkranzseitigen Nabenflansch, die zahnkranzgegenseitigen Speichen 9 mit dem nicht dargestellten zahnkranzgegenseitigen Nabenflansch. Aehnlich wie es schon bei den Motorrädern bekannt ist, können in den Felgenlöchern 12 statt der Speichennippel 10,11 auch die Köpfe der geradlinigen Speichen verankert und die Speichennippel dann in den Nabenflanschen befestigt werden. Beim Zentrieren des Rades durch das Drehen der Speichennippel 10,11 entstehen in den Speichen 8,9 Spannungen T1, T2, deren Verhältnis von dem Verhältnis der Winkel zwischen den Speichen 8, 9 einerseits und der Felgenmittelebene M andererseits abhängig ist. Die dabei entstehenden horizontalen Kraftkomponenten P1, P2 sind zwangsläufig immer gleich gross. Die in Richtung zur Radachse wirkenden Kraftkomponenten S1, S2 erzeugen in der kreisförmigen Felge 1 eine Beanspruchung ihres Materials auf Druck. Die Felgenmittelebene M, welche durch die Mitte der Felgenaussenbreite b verläuft, muss immer mit der Fahrrad - Rahmenmittelebene identisch sein. In diesem Falle ist sie identisch auch mit der Mittelebene N der Felgenlöcher 12. Das Problem am Fahrrad - Hinterrad liegt in dem grossen Unterschied zwischen den Speichenspannungen T1 und T2 an beiden Radseiten. Heute betragen bei den Renn - und Sport-fahrrädern die Spannungen T1 an der Zahnkranzseite des Hinterrades etwa das 1,8 fache der Spannungen T2 an der Zahnkranzgegenseite, was zu einer sehr mangelhaften Standfestigkeit des Hinterrades führt. Die Gründe dafür sind vielfältig und werden im Detail nicht behandelt.

Fig. 2 zeigt eine herkömmliche Felge 21 mit dem gleichen symmetrischen Querschnitt wie bei der Felge 1 in Fig. 1, aber mit einer asymmetrischen nur für ein Fahrrad - Hinterrad verwendbaren Speichenverankerung nach dem neuesten Stand der Technik. Die Mittelebene N der Felgenlöcher 12 ist um das Mass E von der Rahmen - und Felgenmittelebene M in der Felge 21 seitlich versetzt in Richtung zur Zahnkranzgegenseite des nicht dargestellten Hinterrades. Die Speichennippel 10,11 wurden bei dem Zentrieren des Rades so fest angezogen, dass die horizontalen Kraftkomponenten P1, P2 der Speichenspannungen T3, T4 genau gleich gross sind wie bei der Felge 1 in Fig. 1. Im Unterschied zu Fig. 1 hat sich jedoch der Winkel zwischen der Speiche 8 und der Mittelebene M an der Zahnkranzseite des Rades vergrössert und der Winkel zwischen der Speiche 9 und der Mittelebene M verkleinert. Dementsprechend ist auch die Speichenspannung T 3 an der Zahnkranzseite kleiner geworden als die Spannung T 1 in Fig. 1, und T4 grösser als T 2 in Fig. 1. Das angestrebte Ziel hat man erreicht, die Spannungen T 3 und T 4 unterscheiden sich voneinander weniger als die Spannungen T 1 und T 2 in Fig. 1 und das Rad ist standfester geworden. Nach dem Anspannen der Speichen 8, 9 verursachen die Kraftkomponenten S 3, S 4, welche im Unterschied zur Felge 1 in Fig. 1 ausserhalb der Mitte des Felgenquerschittes wirken, eine zusätzliche Beanspruchung der Felge 21 in ihrem ganzen Umfang auf Umstülpung U. Diese versetzte Anordnung der Speichennippel 10, 11 ist in der Praxis nur bei enorm steifen Felgen durchführbar, die schwache aus herkömmlichem, billigem Material hergestellte Felge 21 lässt eine solche Lösung aus nachfolgenden Gründen aber nicht zu.

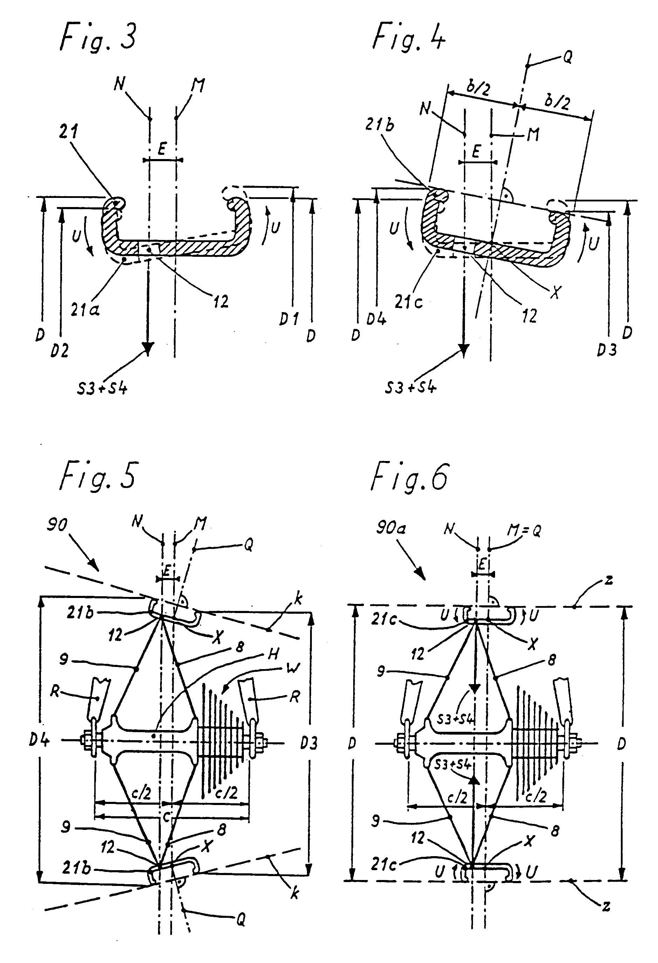

In Fig. 3 sieht man in vergrösserter Darstellung die beim Zentrieren des Rades entstehende unerwünschte Umstülpung (Verdrehung) der Felge 21 in Richtung U. Bei der vorgeschriebenen Speichenspannung erreicht ihr verdrehter Querschnitt den gestrichelten Zustand 21 a, welcher aus darstellerischen Gründen übertrieben verdreht gezeichnet ist. Der vorgeschriebene äussere Durchmesser D vergrössert sich dabei an der Zahnkranzseite auf das Mass D 1, was die Montage des Reifens verhindern kann, an der Zahnkranzgegenseite dagegen verkleinert er sich auf das Mass D 2, was zum gefährlichen Herausspringen des Reifens aus der Felge führen könnte. Die Umstülpung einer Felge ist im allgemeinen besonders ausgeprägt bei leichten und wenig steifen Felgen mit einfachem Felgenhoden, bei grossen Speichenspannungen und bei grosser seitlicher Versetzung der Felgenlöcher.

Fig. 4 zeigt die Felge 21 aus Fig. 2 und 3 in der ersten erfindungsgemässen Ausführungsform. Der unerwünschten Deformation einer Felge infolge der Umstülpung kann man ausgleichend entgegenwirken, indem man bei ihrer Herstellung die geraden Profilstangen auf solche Weise kreisförmig biegt und ihre beiden Enden so miteinander verbindet, dass die Felge abweichend von Fig. 3 eine geringfügig kegelförmige Form aufweist. Der Querschnitt der Felge 21 gerät durch solche Herstellungsart in den (ungespannten) Zustand 21b und die Felge weist an der näher zu den Felgenlöchern 12 liegenden Seite einen grösseren äusseren Durchmesser D 4, an der anderen Seite einen kleineren äusseren Durchmesser D 3 auf. Die Querschnittsachse Q verläuft senkrecht zu der radial äussersten Verbindung beider Felgenränder und schneidet den Felgenboden in seiner Mitte in dem Punkt X durch welchen auch die Mittelebene M der Felge verläuft. Obwohl der Querschnitt der Felge 21 in dem Zustand 21 b bezüglich der zur Felgenmittelebene M geneigten Querschnittsachse Q symmetrisch ist, ist er jedoch bezüglich der Felgenmittelebene M wegen der Kegelform der Felge asymmetrisch. Erst bei dem Anspannen der Speichen im Rad erreichen die Durchmesser D 3, D 4 durch die Wirkung der Kraftkomponenten S 3, S 4 das vorgeschriebene Mass D und der Felgenquerschnitt gerät dadurch aus dem Zustand 21 b in den gestrichelten bezüglich der Felgenmittelebene M symmetrischen Betriebszustand 21 c.

Obwohl der Querschnitt der Felge 21 in Fig. 3 und der Querschnitt der Felge in dem Zustand 21 c in Fig. 4 auf den ersten Blick gleich aussehen, ist hier doch ein grosser Unterschied vorhanden. Während die Felge 21 in Fig. 3 den Zustand nach ihrer Herstellung darstellt, kann man sie im Betrieb nicht gebrauchen, da sie sich unter der Speichenspannung durch die unerwünschte Umstülpung in den unbrauchbaren Zustand 21 a deformiert. Dagegen wurde die kegelförmig in dem Zustand 21 b hergestellte Felge in Fig. 4 erst durch die Betriebsspannung der Speichen und die vorkalkulierte Umstülpung in den Betriebszustand 21 c gebracht und wird darum im Betrieb ihre vorgeschriebenen Betriebsabmessungen einhalten können. Nachfolgend werden in den Figuren 5 und 6 die Vorgänge aus der Fig. 4 nochmals in einem breiteren Zusammenhang erläutert.

Fig. 5 zeigt in Schnittansicht ein ganzes gespeichtes Fahrrad - Hinterrad 90 ohne Reifen in Verkleinerung entsprechend Fig. 4 noch vor dem Anspannen der Speichen 8, 9. Die Hinterradnabe H mit dem Zahnkranzsatz W ist im Fahrradrahmen R montiert und die Felgenmittelebene M ist mit der Rahmenmittelebene identisch wie es die Masse c und c/2 verdeutlichen. Die Felge 21 mit einem bezüglich der Querschnittsachse Q symmetrischen Querschnitt wurde in dem Zustand 21 b hergestellt und die radial äusseren Kanten der Felgenränder mit den unterschiedlichen Durchmessern D 3, D 4 bilden somit einen Kegelmantel k. Der Querschnitt der Felge 21 ist dadurch in dem Zustand 21 b bezüglich der Felgenmittelebene M asymmetrisch. Ergänzend soll gesagt werden, dass diese Methode der ungleichen Durchmesser der Felgenränder auch bei Herstellung der nachfolgend beschriebenen Felgen mit einem bezüglich der Querschnittsachse Q asymmetrischen Querschnitt verwendet werden kann.

Fig. 6 zeigt das in Fig. 5 dargestellte Hinterrad 90 in den, Zustand 90 a nachdem die Speichen 8,9 auf die vorgeschriebene Spannung gespannt wurden. Die Kraftkomponenten S 3, S 4 der Speichenspannungen verursachen eine vorgesehene Umstülpung der Felge in Richtung U aus dem in Fig. 5 dargestellten Zustand 21 b in den neuen für den Betrieb vorgeschriebenen Zustand 21 c. Die radial äusseren Kanten der Felgenränder mit dem gleichen Durchmesser D bilden jetzt eine zylindrische Fläche z. Der Felgenquerschnitt ist in dem Zustand 21 c bezüglich der Felgenmittelebene M, in welcher nun auch die Querschnittsachse Q liegt, symmetrisch. Erst jetzt ist ein guter Sitz des Reifens auf der Felge gewährleistet. Würde man alle Speichen entfernen, so wurde die Felge 21 dank der Elastizität ihres Materials aus dem Betriebszustand 21 c wieder in ihren ursprünglichen Zustand 21 b zurückkehren.

Grundsätzlich ist jede Hinterradfelge mit seitlich versetzten Felgenlochern im gespeichten Rad und bei gespannten Speichen auf Umstülpung beansprucht. Dies verursacht einen grösseren Druck im Felgenmaterial an derjenigen Seite der Felge, an der die Felgenlöcher angebracht sind als an ihrer Gegenseite. Für die Standfestigkeit der Felge ist aber die Ausgeglichenheit dieser Druckkräfte von grosser Bedeutung. Man kann sie erreichen durch die Formgebung des Felgenquerschnittes und/oder durch unterschiedliche Wanddicken im Querschnitt. So entstehen erfindungsgemässe Felgequerschnitte, welche bezüglich ihrer Querschnittsachse asymmetrisch sind und die man nur bei Felgen für Fahrrad-Hinterräder verwenden kann.

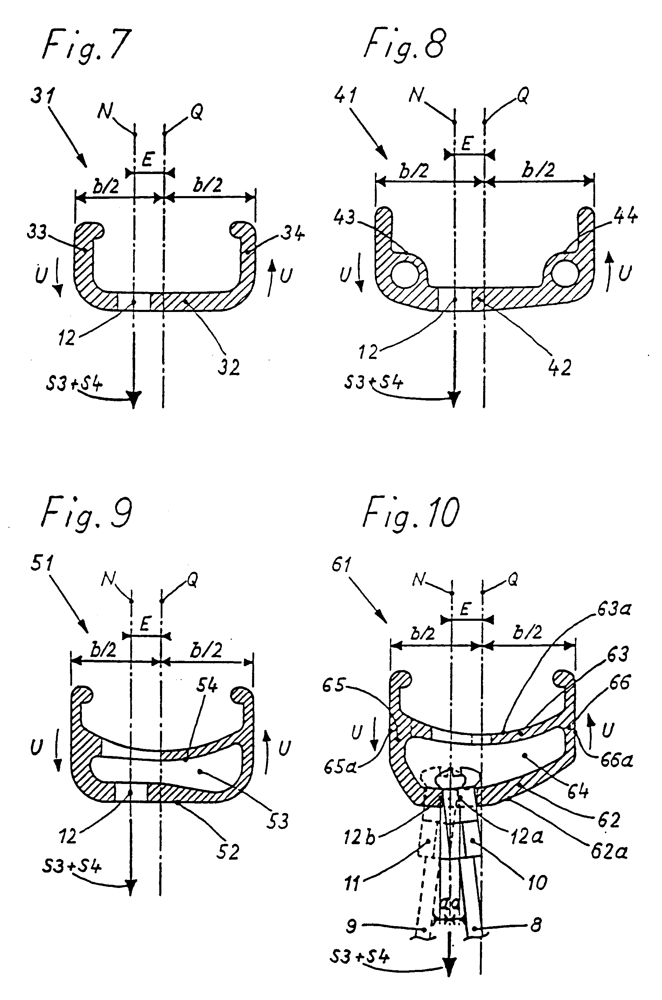

Fig. 7 zeigt eine erfindungsgemässe Felge 31 mit einem einfachen Felgenboden 32, deren bezüglich der Querschnittsachse Q asymmetrischer Querschnitt an der Seite der seitlich versetzten Felgenlöcher 12 einen dickeren Felgenrand 33 aufweist als an der Gegenseite mit dem Felgenrand 34. Diese Massnahme vermindert die Druckbeanspruchung des Felgenmaterials an der mehr belasteten Seite der Felge und macht dadurch die Felge 31 gegen die Umstülpungsdeformation unempfindlicher.

Fig. 8 zeigt eine erfindungsgemässe Felge 41 mit einem bezüglich dem Querschnittsachse Q asymmetrischen Querschnitt, dessen einfacher Felgenboden 42 an der Seite der seitlich versetzten Felgenlöcher 12 dicker ist als an seiner Gegenseite, was ebenfalls die Umstülpung der Felge 41 vermindert. Die Felgenschultern 43, 44, welche die Haken an den Felgenrändern ersetzen, sorgen für die zentrische Lage des Reifens auf der Felge und machen gleichzeitig das Felgenprofil steifer. Die in den Figuren 7 und 8 beschriebenen Massnahmen kann man mit Vorteil kombinieren.

Fig. 9 zeigt eine erfindungsgemässe Felge 51 mit seitlich versetzten Felgenlöchern 12 und einem asymmetrischen Querschnitt mit doppeltem Felgenboden, welche von aussen wie eine symmetrische Felge nach dem Stand der Technik aussieht. Ihr Querschnitt 51, aus welchen Gründen auch immer, ist so gestaltet, dass die rings um den gesamten Querschnitt verlaufende äussere Umrisslinie 52 des Querschnittes bezüglich der Querschnittsachse Q symmetrisch ist. Gegen die Umstülpung U der Felge wirkt neben ihrem doppelten Felgenboden auch die vergrösserte geschnittene Fläche und somit eine verminderte Druckbeanspruchtung des Felgenmaterials an der die Felgenlöcher 12 enthaltenden Querschnittsseite. Die Verdickungen der Wunde des Querschnittes 51 werden im Bereich des Innenraumes 53 der Felge in Richtung zum Inneren des Felgenquerschnittes 51 ausgeführt, sodass die rings um den Querschnitt des Innenraumes 53 verlaufende Umrisslinie 54 des Querschnittes des Innenraumes 53 bezüglich der Querschnittsachse Q asymmetrisch ist. Die Asymmetrie einer solchen Felge 51 kann man deshalb nur aus ihrem Querschnitt ersehen.

Fig. 10 zeigt eine erfindungsgemässe Felge 61 für Tourenfahrräder und Sportfahrräder für Geländefahrten mit seitlich versetzten Felgenlöchern 12 a, 12 b und einem asymmetrischen Querschnitt, welche einen doppelten Felgenboden aufweist. Zwischen dem radial inneren Felgenboden 62 und dem radial äusseren Felgenboden 63 entsteht ein Innenraum 64 mit einer ziemlich grossen Schnittfläche, dessen Existenz die Steifigkeit der Felge stark erhöht. Die Dicke des Felgenbodens 63 ist an der Seite des Querschnittes mit den Felgenlöchern 12 a, 12 b grösser als an seiner Gegenseite. Der Felgenboden 62 ist abgeschrägt ausgebildet und seine Dicke ist im Bereich der Felgenlöcher 12 a, 12 b grösser als im übrigen Bereich. Auch der näher zu den Felgenlöchern 12 a, 12 b liegende Felgenrand 65 ist dicker als der gegenseitige Felgenrand 66. Die beschriebenen Verdickungen der beiden Felgenböden 62, 63 und des Felgenrandes 65 verbessern das Verhältnis der Druckkräfte im Material zwischen den beiden Seiten der Felge 61 und vermindern somit die Umstülpung der Felge 61 in Richtung U. In der Praxis werden aber in einem Felgenprofil nicht unbedingt alle drei Verdickungen zusammen angewendet. Auch ohne jegliche Verdickung im Querschnitt 61 würde schon allein seine asymmetrische Form gegen die Umstülpung U der Felge wirken, da an der Seite der Felgenlocher 12 a, 12 b eine grössere radiale Höhe des Querschnittes vorhanden ist als an seiner Gegenseite und somit ist die Felge an dieser Seite radial steifer. Die Zentren der zahnkranzseitigen Felgenlöcher 12 a und der zahnkranzgegenseitigen Felgenlöcher 12 b liegen nicht in einer einzigen Radialebene, sondern sind um ein kleines Mass a abwechslungsweise von der Mittelebene N der Zentren aller Felgenlöcher seitlich entfernt. Die Mittelebene N ist eine Ebene, die sich aus dem Durchschnitt der Abstände der Zentren aller Felgenlöcher von der Querschnittsachse Q ergibt. Aehnliche Anordnung der Felgenlöcher ist heute üblich bei den meisten herkömmlichen Felgen mit einer symmetrischen Speichenverankerung und hat ihre Vor- und Nachteile, die hier jedoch nicht behandelt werden.

Die äussere Umrisslinie 62 a des radial inneren Felgenbodens 62 ist der einzige Teil der gesamten äusseren Umrisslinie des Felgenquerschnittes 61, welcher bezüglich der Querschnittsachse Q asymmetrisch ist. Die äussere Umrisslinie 63 a des radial äusseren Felgenbodens 63 soll aber wegen einer problemlosen Verbindung der Felge mit der Bereifung bezüglich der Querschnittsachse Q symmetrisch sein. Ebenso kann auch die äussere Umrisslinie 65 a des Felgenrandes 65 im wesentlichen zu der äusseren Umrisslinie 66 a des Felgenrandes 66 bezüglich der Querschnittsachse Q symmetrisch sein wie es in Fig. 10 dargestellt ist. Die aus drei gebogenen Abschnitten bestehende Umrisslinie 62 a kann man verschiedenartig gestalten, wie beispielsweise aus drei geraden Abschnitten oder aus zwei gebogenen oder geraden Abschnitten und einem Knick dazwischen im Bereich der Mittelebene N oder sie kann aus einem einzigen aus mehreren Radien zusammengesetzten Bogen bestehen. Die relativ grosse Breite und kleine Höhe des Felgenquerschnittes 61 wie auch die in ihrer ganzen Länge geradlinigen und mit der Querschnittsachse Q parallelen Felgenränder 65, 66, welche für eine gute Bremswirkung der Felgenbremsen sorgen sollen, verursachen in der äusseren Umrisslinie des Felgenquerschnittes 61 zwischen den Felgenrändern 65, 66 einerseits und dem Felgenboden 62 andererseits eine ausgeprägte Richtungsänderung mit kleinem Radius, die an der Seite des Felgenrandes 66 über 45 Winkelgrade beträgt.

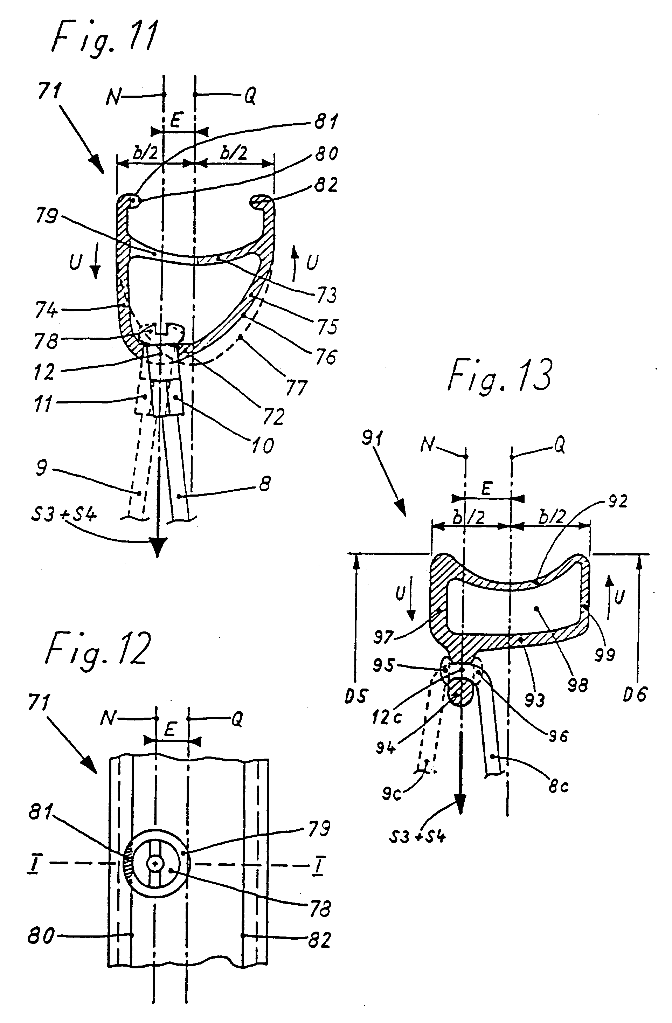

Fig. 11 zeigt eine erfindungsgemässe aerodynamische Felge 71 für Sport- und Rennfahrräder mit seitlich versetzten Felgenlöchern 12 und einem asymmetrischen Querschnitt mit doppeltem Felgenboden. Die Dicke des radial äusseren Felgenbodens 73 ist an der Seite des Querschnittes mit den Felgenlöchern 12 grösser als an seiner Gegenseite. Auch der sehr kurze radial innere Felgenboden 72 ist wenigstens an der Verbindungsstelle mit dem dickeren Felgenrand 74 dicker als an der Verbindungsstelle mit dem dünneren Felgenrand 75. Diese Verdickungen der Querschnittswände, welche man wahlweise auch einzeln und/oder in verschiedenem Ausmass anwenden kann, verursachen eine grössere Konzentration des Felgenmaterials an der mehr belasteten Felgenseite und wirken somit gegen die Umstülpung der Felge 71 in Richtung U. Aehnliche Wirkung hat auch die markante asymmetrische Form des Felgenquerschnittes 71 alleine für sich, da sie eine grössere radiale Steifigkeit der Felge an dieser mehr belasteten Felgenseite verursacht. Beide beschriebenen Wirkungen gegen die Umstülpung der Felge 71 sind noch wirksamer als bei der Felge 61 in Fig. 10, da die Asymmetrie der Felge 71 mehr ausgeprägt ist.

Im Unterschied zur Felge 61 in Fig. 10 hat der Querschnitt 71 aus aerodynamischen Gründen eine eher dreieckige Form, ist relativ schmal und ziemlich hoch und seine äussere Umrisslinie 76 ist fliessend und ohne auffällige Richtungsänderung gestaltet. Da der radial innere Felgenboden 72 kurz ist und beide Felgenränder 74, 75 sehr lang geraten sind, können sie auch nicht zueinander bezüglich der Querschnittsachse Q symmetrisch sein, wie es bei der Felge 61 in Fig. 10 der Fall ist. Die äussere Umrisslinie 76 des gesamten Querschnittes 71 ist darum in dem Bereich von dem radial äussersten Punkt an einer Seite des Querschnittes 71 bis zu dem radial äussersten Punkt an der Gegenseite des Querschnittes 71 bezüglich der Querschnittsachse Q asymmetrich und ist zusammengesetzt aus den äusseren Umrisslinien beider Felgenränder 74, 75 und des radial inneren Felgenhodens 72. Die am Beispiel der aerodynamischen Felge 71 gezeigte sehr markante Asymmetrie eines Felgenquerschnittes kann man beispielsweise aus ästhetischen Gründen auch bei Feigen für andere Fahrradtypen anwenden, welche einen breiteren und niedrigeren Querschnitt als die Felge 71 haben und wo die Aerodynamik eine untergeordnete Rolle spielt. Zum Vergleich mit der asymmetrischen Hinterradfelge 71 ist gestrichelt die Form einer bereits bekannten symmetrischen aerodynamischen Felge 77 dargestellt, welche die gleiche Breite und Höhe hat wie die Felge 71 und für das Vorderrad des gleichen Fahrrades bestimmt ist.

Um bei einer Felge mit doppeltem Felgenboden die Speichennippel einsetzen zu können und mit einer automatischen Speichennippel - Anziehmaschine, bei der der Schraubenzieher von aussen in die Nippelköpfe 78 eingreift und sich etwa in der Ebene N dreht, anziehen zu können, müssen die Felgenaussenlöcher 79 in dem radial äusseren Felgenboden 73 einen grösseren Durchmesser als die Nippelköpfe 78 haben. Die durch den Zahnkransatz verursachte unerwünschte Schüsseltiefe in einem herkömmlichen Hinterrad macht bei den heutigen Sport - und Rennfahrrädern mit einem Zahnkranzsatz von 7 bis 8 Zahnkränzen axial etwa 8 Millimeter aus. Bei einer beidiesen Fahrrädern üblichen schmalen Felge kann das der Schüsseltiefe entgegenwirkende Mass E wegen dem Haken 80, der dem Schraubenzieher im Wege steht, lediglich zwei bis drei Millimeter betragen. Um das Mass E zu vergrössern sind in der Umlaufrichtung der Felge 71 an den Stellen der Speichennippel 10, 11 in dem Haken 80 Ausnehmungen 81 vorgesehen, wie es auch in Figur 12 dargestellt ist.

Fig. 12 zeigt die Ansieht der Felge 71 in Richtung zur Radachse. Die Lage des Querschnittes der Felge 71 aus der Fig. 11 ist hier durch die axiale Schnittebene I - I angegeben und die Ausnehmung 81 ist schraffiert dargestellt. Diese Ausnehmung 81 schafft genügend Platz für den Schraubenzieher und ermöglicht somit eine wertwolle Vergrösserung des Masses E beispielsweise bei einer 20 Millimeter schmalen Felge bis auf etwa 4 Millimeter, sodass dievorher enwähnte Schüsseltiefe von 8 Millimetern auf die Hälfte reduziert werden kann. Die hauptsächlich bei schmalen Felgen vorgesehenen Ausnehmungen 81 kann man auf einer Felge mit einem montierten Reifen kaum wahrnehmen und Fahrversuche haben gezeigt, dass auch ein Herausspringen des Reifenrandes aus seiner Lage unter dem Haken 80 nicht in Frage kommt. Da die Ausnehmungen 81 nur an dem näher zu den Speichennippeln 10, 11 liegenden Haken 80 ausgeführt werden, der gegenseitige Haken 82 jedoch unberührt bleibt, gibt es auch bei der Reifenmontage keine Probleme, weil man diesen Vorgang von der Felgenseite mit dem Haken 82 ausführen Kann.

Auch bei einer Felge mit einem bezüglich der Querschnittsachse Q asymmetrischen Querschnitt verhindert diese Asymmetrie alleine - je nach Dimensionierung des Felgenprofils - das Entstehen eines unzulässig grossen Unterschiedes in den Durchmessern der Felgenränder durch die Umstülpung nicht in jedem Falle ausreichend. Es kann darum von Vorteil sein, wenn auch hier die Aussendurchmesser der Felgenränder ungleich gross hergestellt werden, wie es schon bei symmetrischen Felgen empfohlen und in den Figuren 4 und 5 anhand der Durchmesser D 3, D 4 gezeigt wurde.

Fig. 13 zeigt eine erfindungsgemässe Schlauchreifenfelge 91 für Sport - und Rennfahrräder mit einem asymmetrischen Querschnitt, bei welcher der nicht dargestellte Schlauchreifen auf dem radial äusseren Felgenboden 92 aufgeklebt wird. Der radial innere Felgenboden 93 weist einen Felgenflansch 94 auf, dessen Querschnitt ähnlich ausgebildet ist wie bei den Nabenflanschen der herkömmlichen Fahrradnaben. Die Mittelebene des Felgenflansches 94, welche mit der Mittelebene N der Zentren aller in axialer Richtung verlaufenden Felgenlöcher 12 c im wesentlichen identisch ist, ist um das Mass E von der Querschnittsachse Q seitlich versetzt. Die um Ende etwa rechtwinklig gebogenen Speichen 8 c, 9 c sind in dem Rad umgekehrt angeordnet und folglich mit ihren Speichenköpfen 95, 96 in den axialen Felgenlöchern 12 c verankert, sodass die nicht dargestellten Speichennippel in den besonders dafür ausgebildeten Nabenflanschen verankert sind. Bei auf solche Art gespeichten Motorradrädern, jedoch mit einem in der Mitte einer symmetrisehen Felge verlaufenden Felgenflansch, wird die Verwendung eines schiauchlosen Reifens ermöglicht, da das Felgenbett keine zu abdichtenden radialen Löcher aufweist. Statt mit Hilfe der Speichennippel kann man die Spannung in den Speichen 8 c, 9 c auch mit anderen Mitteln erzeugen, die hier jedoch nicht beschrieben werden, da sie nicht Gegenstand dieser Patentanmeldung sind. Durch die besondere Formgebung des Felgenquerschnittes 91 und die umgekehrte Speichenanordnung im Rad vergrössert sich das Mass E beachtlich. Bei der 20 Millimeter breiten im Massstab 2:1 gezeichneten Felge 91 beträgt das Mass E etwa 6 Millimeter, sodass die bei Rennfahrrädern übliche Schüsseltiefe von 8 Millimetern praktisch beseitigt ist und der angestrebte Ausgleich der Speichenspannungen an beiden Radseiten fast vollständig erreicht ist.

Das Mass E kann man noch weiter vergrössern, indem man den Felgenflansch 94 seitlich noch weiter weg von der Querschnittsachse Q versetzt, beispielsweise soweit, bis die äussere radiale Fläche des Felgenflansches 94 und des Felgenrandes 97 fluchten. Der aus dem sehr grossen Mass E resultierenden starken Tendenz der Felge 91 zur Umstülpung in Richtung U muss man durch entsprechende Massnahmen entschlossen entgegenwirken, wie durch die in Fig. 13 dargestellten vergrösserten Wanddicken des Felgenprofils an der die Mittelebene N der Felgenlöcher 12 c enthaltenden Felgenseite. Zusätzlich kann man beispielsweise die radiale Höhe des ganzen Querschnittes und somit die Schnittfläche des Innenraumes 98 vergrössern und/oder den Querschnitt noch asymmetrischer gestalten als es in Fig. 13 gezeigt ist. Die Felge kann man ebenfalls bei ihrer Herstellung derart formen dass der Aussendurchmesser D 5 des Felgenrandes 97 an der mehr belasteten Felgenseite grösser ist als der Aussendurchmesser D 6 des Felgenrandes 99. Erst unter der vorgesehenen Zugkraft der Speichen 8 c. 9 c und der Wirkung der Kraftkomponenten S 3, S 4 im gespeichten Hinterrad richtet sich die Felge 91 so aus, dass die Aussendurchmesser D 5, D 6 der beiden Felgenränder 97, 99 im wesentlichen die gleiche vorgeschriebene Betriebsgrösse erreichen. Wenn man die Felge 91 durch die beschriebenen untereinander auch zweckmässig kombinierbaren Massnahmen ausreichend dimensioniert, sodass ihre Betriebsabmestungen langfristig gewährleistet sind, kann man solche Grössen des Masses E erreichen, welche bei den Felgenprofilen von gleicher Breite jedoch mit den in den radialen Felgenlöchern verankerten Speichennippeln nicht annähernd erreichbar sind. Dann können neben einer guten Standfestigkeit des Hinterrades auch noch weitere Vorteile erzielt werden wie beispielsweise die Montage eines zusätzlichen Zahnkranzes. Einen weiteren Vorteil der Felge 91 ist auch darin zu sehen, dass der radial äussere Felgenboden 92 keine die Steifigkeit der Felge stark vermindernden Felgenaussenlöcher von einem erforderlichen grossen Durchmesser enthält, wie es sonst bei den Felgen mit einem doppelten Felgenboden und radialen Felgenlöchern immer der Fall ist.

Die heutigen herkömmlichen Felgen werden aus verschiedenen Materialien hergestellt, haben unzählige Querschnittsformen und sind für unterschiedliche Reifentypen bestimmt. Es gibt auf dem Markt erste teure verwindungssteife Carbonfelgen mit einheitlichem Querschnitt und einer symmetrischen Speichenverankerung für das Vorderrad und mit seitlich versetzten Felgenlöchern für das Hinterrad. Mit der Zeit werden auch verschiedenartige erfindungsgemässe Felgen mit seitlich versetzten Felgenlöchern für das Hinterrad entstehen, welche die Merkmale des Patentanspruches 1 aufweisen und ihr Querschnitt somit bezüglich ihrer Mittelebene asymmetrisch ist. Die Felge ist derart geformt und dimensioniert, dass sie sich unter der vorgesehenen Zugkraft der Speichen so ausrichtet, dass die Aussendurchmesser der beiden Felgenränder im wesentlichen gleich gross sind und der Unterschied im Umfang der Felgenränder die zulässige Abweichung vom Sollmass nicht überschreitet.

Die Erfindung eignet sich besonders dazu, um, in Kombination der verschiedenen Merkmale zueinander, eine grosse Anzahl verschiedener Ausführungsformen herzustellen, die in bestimmten Eigenschaften fein abgestuft sind oder die ganz gezielt bestimmte Eigenschaften aufweisen. Kombiniert werden insbesondere die verschiedenen Formgebungen und Dimensionierungen der Profile und/oder die Verformungsmöglichkeiten unter dem Krafteinfluss der Speichenzugkraft. Dadurch sollte es möglich sein, alle technischen Erfordernisse, die an eine Felge für ein Fahrrad-Hinterrad mit Zahnkranzsatz gestellt werden, zu erfüllen.

Besonders gute Aussichten haben dabei Felgen aus kostengünstigen Leichtmetallegierungen, bei welchen man verschiedene asymmetrische Profile mit unterschiedlichen Verdickungen relativ einfach und billig herstellen kann. Es ist zu hoffen, dass mit der Zeit eine asymmetrische Hinterradfelge mit seitlich versetzter Speichenverankerung bei breiter Oeffentlichkeit mehr Zustimmung findet als eine symmetrische Felge, weil die asymmetrische Form des Felgenquerschnittes technisch begründet ist.

## Patentansprüche

1. Felge aus Metall für ein gespeichtes Fahrrad-Hinterrad mit Felgenlöchern oder anders ausgebildeten Verankerungsstellen zur Verankerung von Drahtspeichen, bei welcher die durchschnittliche axiale Lage der Felgenlöcher (12) oder der anders ausgebildeten Verankerungsstellen, in welchen die Zugkraft der Drahtspeichen auf die Felge ausgeübt wird, von der Felgenmittelebene (M) seitlich versetzt ist, dadurch gekennzeichnet, dass bevor die Felge im Rad eingespeicht und der Zugkraft der Speichen (8, 9) ausgesetzt ist, ihr Querschnitt bezüglich der Felgenmittelebene (M) asymmetrisch ist und die Felge derart geformt und dimensioniert ist, dass sie sich unter der vorgesehenen Zugkraft der Speichen so ausrichtet, dass die Aussendurchmesser (D) der beiden Felgenränder im wesentlichen gleich gross sind und die Felge deshalb keine Umstülpung aufweist.

2. Felge nach Anspruch 1, dadurch gekennzeichnet, dass ihr Querschnitt bezüglich der Felgenmittelebene (M) mehrfach asymmetrisch ist, weil er verschiedene asymmetrische Merkmale aufweist, wobei diese Merkmale zusammenwirkend gegen die Umstülpung der Felge durch den Speichenzug wirken.

3. Felge nach Anspruch 1, dadurch gekennzeichnet, dass ihr Querschnitt (21b) bezüglich der Querschnittsachse (Q) symmetrisch ist und die Felge derart geformt ist, dass sie an der die Mittelebene (N) der Zentren aller Felgenlöcher (12) enthaltenden Seite einen grösseren äusseren Durchmesser (D4) des Felgenrandes aufweist als der äussere Durchmesser (D3) des Felgenrandes an ihrer Gegenseite ist, wodurch ihr Querschnitt (21b) bezügliche der Felgenmittelebene (M) asymmetrisch ist, wobei diese Asymmetrie gegen die Umstülpung der Felge durch den Speichenzug wirkt.

4. Felge nach Anspruch 1 oder 2, dadurch gekennzeichnet, dass ihr Querschnitt (31, 41) bezüglich der Querschnittsache (Q) asymmetrisch ist und einen einfachen Felgenboden besitzt, welcher für jeden Speichennippel (10, 11) ein einziges im wesentlichen in radialer Richtung verlaufendes Felgenloch (12) aufweist.

5. Felge nach Anspruch 1 oder 4, dadurch gekennzeichnet, dass ihr Querschnitt (31) an derjenigen Seite der Querschnittsachse (Q), welche die Mittelebene (N) der Zentren aller Felgenlöcher (12) enthält, einen dickeren Felgenrand (33) aufweist als an seiner Gegenseite.

6. Felge nach einem der Ansprüche 1, 4 oder 5, dadurch gekennzeichnet, dass ihr Querschnitt (41) an derjenigen Seite der Querschnittsachse (Q), welche die Mittelebene (N) der Zentren aller Felgenlöcher (12) enthält, einen dickeren Felgenboden (42) aufweist als an seiner Gegenseite.

7. Felge nach Anspruch 1 oder 2, dadurch gekennzeichnet, dass ihr Querschnitt (51, 61, 71) bezüglich der Querschnittsachse (Q) asymmetrisch ist und einen doppelten Felgenboden besitzt, wobei der radial innere Felgenboden (62, 72) für jeden Speichennippel (10, 11) ein im wesentlichen in radialer Richtung verlaufendes Felgenloch (12, 12a, 12b) mit einem kleineren Durchmesser aufweist als derjenige des Nippelkopfes (78) ist, und der radial äussere Felgenboden (63, 73) für jeden Speichennippel (10, 11) ein Felgenaussenloch (79) mit einem grösseren Durchmesser aufweist als derjenige des Nippelkopfes (78) ist, und wobei zwischen den beiden Felgenböden (62, 63; 72, 73) sich ein Innenraum (53, 64) befindet.

8. Felge nach Anspruch 7 dadurch gekennzeichnet, dass die rings um ihren gesamten Querschnitt (51) verlaufende äussere Umrisslinie (52) des Querschnittes (51) bezüglich der Querschnittsachse (Q) symmetrisch ist und im Querschnitt (51) hauptsächlich an derjenigen Seite der Querschnittsachse (Q), welche die Mittelebene (N) der Zentren aller Felgenlöcher (12) enthält, Verdickungen der Wände des Querschnittes (51) im Bereich des Innenraumes (53) der Felge ausgeführt sind, sodass die rings (im den Querschnitt des Innenraumes (53) verlaufende Umrisslinie (54) des Querschnittes des Innenraumess (53) bezüglich der Querschnittsachse (Q) asymmetrisch ist.

9. Felge nach Anspruch 7 dadurch gekennzeichnet, dass von der äusseren Umrisslinie ihres Querschnittes (61) die äussere Umrisslinie (62a) des radial inneren Felgenbodens (62) bezüglich der Querschnittsachse (Q) asymmetrisch ist, der gesamte übrige Bereich der rings um den Querschnitt (61) verlaufenden äusseren Umrisslinie des Querschnittes (61) bezüglich der Querschnittsachse (Q) jedoch symmetrisch ist.

10. Felge nach Anspruch 7 dadurch gekennzeichnet, dass der Bereich der äusseren Umrisslinie (76) ihres Querschnittes (71), welcher die Umrisslinien beider Felgenränder (74, 75) und des radial inneren Felgenbodens (72) beinhaltet und ohne Unterbrechung von dem radial äussersten Punkt an einer Seite des Querschnittes (71) bis zu dem radial äussersten Punkt an der Gegenseite des Querschnittes (71) verläuft, bezüglich der Querschnittsachse (Q) asymmetrisch ist.

11. Felge nach Anspruch 2 und einem der Ansprüche 7 bis 10, dadurch gekennzeichnet, dass in ihrem Querschnitt (51, 61, 71, 91) an derjenigen Seite der Querschnittsachse (Q), welche die Mittelebene (N) der Zentren aller Felgenlöcher (12; 12a, 12b; 12c) enthält, im Vergleich zu der Gegenseite des Querschnittes (51, 61, 71, 91), der radial innere Felgenboden (62, 72, 93) oder der radial äussere Felgenboden (63, 73, 92) oder der Felgenrand (65, 74, 97) dicker ausgeführt ist oder dass mehrere der hier genannten Verdickungen kombiniert sind.

12. Felge nach Anspruch 2 und einem der Ansprüche 4 bis 11, dadurch gekennzeichnet, dass ihr Querschnitt (31, 41, 51, 61, 71, 91) bezüglich der Querschnittsachse (Q) asymmetrisch ist und die Felge derart geformt ist, dass sie an der die Mittelebene (N) der Zentren aller Felgenlöcher (12; 12a, 12b; 12c) enthaltenden Seite einen grösseren äusseren Durchmesser (D5) des Felgenrindes aufweist als an ihrer Gegenseite (D6).

13. Felge nach Anspruch 2 und einem der Ansprüche 4 bis 12, dadurch gekennzeichnet, dass in ihrem Querschnitt (31, 41, 51, 61, 71, 91) an derjenigen Seite der Querschnittsachse (Q), welche die Mittelebene (N) der Zentren aller Felgenlöcher (12; 12a, 12b; 12c) enthält, die Fläche des Felgenmaterial - Querschnittes grösser ist als an der Gegenseite des Querschnittes (31, 41, 51, 61, 71, 91).

14. Felge nach einem der Ansprüche 7 oder 9 bis 13, dadurch gekennzeichnet, dass ihr Querschnitt (61, 71, 91) einen doppelten Felgenboden besitzt,wobei zwischen den beiden Felgenböden (62, 63; 72, 73; 92, 93) sich ein Innenraum (64, 98) befindet, und wobei an derjenigen Seite der Querschnittsachse (Q), welche die Mittelebene (N) der Zentren aller Felgenlöcher (12; 12a, 12b;) enthält die Fläche des Innenraum - Querschnittes (64,) grösser ist als an der Gegenseite des Querschnittes (61, 71,).

15. Felge nach einem der Ansprüche 2, 4, 6, 7, 9 bis 14, dadurch gekennzeichnet, dass die radiale Höhe ihres Querschnittes (41, 61, 71, 91) an derjenigen Seite der Querschnittsachse (Q), welche die Mittelebene (N) der Zentren aller Felgenlöcher (12; 12a, 12b; 12c) enthält, gemessen axial in der Mitte der jeweiligen Querschnittshälfte und parallel zu der Querschnittsachse (Q), grösser ist als an der Gegenseite des Querschnittes (41, 61, 71, 91).

16. Felge nach einem der Ansprüche 1 bis 15, dadurch gekennzeichnet, dass in dem Haken (80) des näher zu den Felgenlöchern (12) sich befindenden Felgenrandes (74) in der Umlaufrichtung der Felge an den Stellen der Speichennippel (10, 11) Ausnehmungen (81) vorgenommen sind, welche den Haken (80) an diesen Stellen von dem Felgenrand (74) teilweise oder vollständig beseitigen.

17. Felge nach einem der Ansprüche 2 oder 9 bis 16, dadurch gekennzeichnet, dass ihr Querschnitt (91) bezüglich der Querschnittsachse (Q) asymmetrisch ist und einen radial nach innen gerichtet ausgebildeten, von der Querschnittsachse (Q) seitlich versetzten Felgenflansch (94) mit im wesentlichen in axialer Richtung verlaufenden Felgenlöchern (12c) aufweist, welche Felgenlöcher (12c) zur Verankerung der am Ende etwa rechtwinklig gebogenen Speichen (8c, 9c) mit Hilfe von ihren Speichenköpfen (95, 96) dienen.

18. Felge nach einem der Ansprüche 1 bis 17, dadurch gekennzeichnet, dass sie aus einem Leichtmetall oder einer Leichtmetallegierung hergestellt ist.

19. Gespeichtes Fahrrad - Hinterrad mit einer Felge nach einem der Ansprüche 1 bis 18.

20. Fahrrad mit einem Hinterrad, welchem eine Felge gemäss einem der Ansprüche 1 bis 18 aufweist.

## Claims

1. Rim made from metal for a spoked bicycle rear wheel with rim holes or otherwise formed anchoring points for the anchoring of wire spokes, in which the average axial position of the rim holes (12) or the otherwise constructed anchoring points, in which the tensile force of the wire spokes is exerted on the rim, is laterally displaced relative to the rim median plane (M), characterized in that before the rim is spoked in the wheel and exposed to the tensile force of the spokes (8,9), its cross-section with respect to the rim median plane (M) is asymmetrical and the rim is shaped and dimensioned in such a way that it is so oriented under the tensile force of the spokes that the external diameters (D) of the two rim edges are substantially identical and consequently the rim has no inversion.

2. Rim according to claim 1, characterized in that its cross-section with respect to the rim median plane (M) is multiply asymmetrical, because it has different asymmetrical features, said features in conjunction acting against the inversion of the rim by spoke tension.

3. Rim according to claim 1, characterized in that its cross-section (21b) with respect to the cross-sectional axis (Q) is symmetrical and the rim is shaped in such a way that it has on the side containing the median plane (N) of the centres of all the rim holes (12) a larger external diameter (D4) of the rim edge than the external diameter (D3) of the rim edge on its opposite side, so that its cross-section (21b) is asymmetrical with respect to the rim median plane (M), said asymmetry acting against the inversion of the rim by spoke tension.

4. Rim according to claim 1 or 2, characterized in that its cross-section (31,41) relative to the cross-sectional axis (Q) is asymmetrical and has a simple rim base, which for each spoke nipple (10,11) has a single, substantially radially directed rim hole (12).

5. Rim according to claim 1 or 4, characterized in that its cross-section (31) on that side of the cross-sectional axis (Q) which contains the median plane (N) of the centres of all the rim holes (12) has a thicker rim edge (33) than on the opposite side thereof.

6. Rim according to one of the claims 1, 4 or 5, characterized in that its cross-section (41) on that side of the cross-sectional axis (Q), which contains the median plane (N) of the centres of all the rim holes (12) has a thicker rim base (42) than on its opposite side.

7. Rim according to claim 1 or 2, characterized in that its cross-section (51,61,71) is asymmetrical relative to the cross-sectional axis (Q) and has a double rim base, the radially inner rim base (62,72) for each spoke nipple (10,11) has a substantially radially directed rim hole (12,12a,12b) with a smaller diameter than that of the nipple head (78) and the radially outer rim base (63,73) for each spoke nipple (10,11) has a rim outer hole (79) with a larger diameter than that of the nipple Head (78) and between the two rim bases (62,63;72,73) there is an inner space (53,64).

8. Rim according to claim 7, characterized in that the outer outline (52) of the cross-section (51) passing around its entire cross-section (51) is symmetrical with respect to the cross-sectional axis (Q) and in cross-section (51) has, mainly on that side of the cross-sectional axis (Q) which contains the median plane (N) of the centres of all the rim holes (12), thickenings of the walls of the cross-section (51) in the vicinity of the inner space (53) of the rim, so that the outline (54) of the cross-section of the inner space (53) passing round the cross-section of the latter is asymmetrical with respect to the cross-sectional axis (Q).

9. Rim according to claim 7, characterized in that from the outer outline of its cross-section (61) the outer outline (62a) of the radially inner rim base (62) is asymmetrical relative to the cross-sectional axis (Q), but the entire remaining area of the outer outline of the cross-section (61) passing round the latter is symmetrical relative to the cross-sectional axis (Q).

10. Rim according to claim 7, characterized in that the area of the outer outline (76) of its cross-section (71), which contains the outlines of both rim edges (74,75) and the radially inner rim base (72) and which passes without interruption from the radially outermost point on one side of the cross-section (71) to the radially outermost point on the opposite side of the cross-section (71) is asymmetrical relative to the cross-sectional axis (Q).

11. Rim according to claim 2 and one of the claims 7 to 10, characterized in that in its cross-section (51,61,71,91) at that side of the cross-sectional axis (Q), which contains the median plane (N) of the centres of all the rim holes (12,12a, 12b,12c), it is thicker than the opposite side of the cross-section (51,61,71,91) of the radially inner rim base (62,73, 93) or the radially outer rim base (63,73,92) or the rim edge (65,74,97), or several of the indicated thickenings are combined.

12. Rim according to claim 2 and one of the claims 4 to 11, characterized in that its cross-section (31,41,51,61,71,91) is asymmetrical with respect to the cross-sectional axis (Q) and the rim is shaped in such a way that on its side containing the median plane (N) of the centres of all the rim holes (12,12a,12b,12c) it has a larger external diameter (D5) of the rim edge than on the opposite side (D6).

13. Rim according to claim 2 and one of the claims 4 to 12, characterized in that in its cross-section (31,41,51,61,71,91) on that side of the cross-sectional axis (Q), which contains the median plane (N) of the centres of all the rim holes (12,12a,12b,12c), the surface of the rim material cross-section is larger than on the opposite side of the cross-section (31,41,51,61,71,91).

14. Rim according to one of the claims 7 or 9 to 13, characterized in that its cross-section (61,71,91) has a double rim base and between the two rim bases (62,63;72,73;92,93) there is an inner space (64,98) and on that side of the cross-sectional axis (Q), which contains the median plane (N) of the centres of all the rim holes (12,12a,12b), the surface of the inner space cross-section is larger than on the opposite side of the cross-section (61,71).

15. Rim according to one of the claims 2,4,6,7,9 to 14, characterized in that the radial height of its cross-section (41,61, 71,91) on that side of the cross-sectional axis (Q), which contains the median plane (N) of the centres of all the rim holes (12,12a,12b,12c), measured axially in the centre of the particular cross-section half and parallel to the cross-sectional axis (Q), is larger than on the opposite side of the cross-section (41,61,71,91).

16. Rim according to one of the claims 1 to 15, characterized in that in the hook (80) of the rim edge (74) closer to the rim holes (12) and in the rotation direction of the rim, recesses (81) are made at the locations of the spoke nipples (10,11) and at these locations partly or completely remove the hooks (80) from the rim edge (74).

17. Rim according to one of the claims 2 or 9 to 16, characterized in that its cross-section (91) relative to the cross-sectional axis (Q) is asymmetrical and has a radially inwardly directed rim flange (94) laterally displaced from the cross-sectional axis (Q) with substantially axially directed rim holes (12c), which are used for the anchoring of spokes (8c, 9c) bent roughly at right angles at the end and with the aid of the spoke heads (95,96).

18. Rim according to one of the claims 1 to 17, characterized in that it is made from light metal or light alloy.

19. Spoked bicycle rear wheel with a rim according to one of the claims 1 to 18.

20. Bicycle with a rear wheel, which has a rim according to one of the claims 1 to 18.

## Revendications

1. Jante en métal pour roue à rayons arrière de bicyclette avec dos trous de jante ou des points d'ancrage d'une autre conception pour l'ancrage de rayons en fil métallique, dans laquelle la position axiale moyenne des trous de jante (12) ou des points d'ancrage d'une autre conception, dans lesquels la force de traction des rayons métalliques est exercée sur la jante, est décalée latéralement par rapport au plan médian (M) de la jante, caractérisée en ce que avant que la jante ne soit montée dans la roue et exposée à la force de traction des rayons (8, 9), sa section est asymétrique par rapport au plan médian (M) de la jante et la jante est conformée et dimensionnée de façon à s'orienter sous l'effet de la force de traction prévue des rayons, de telle sorte que le diamètre extérieur (D) des doux bords de la jante soit sensiblement égal et que la jante ne présente donc pas de retournement.

2. Jante selon la revendication 1, caractérisée en ce que sa section est plusieurs fois asymétrique par rapport au plan médian (M) de la jante, car elle présente différentes caractéristiques asymétriques, ces caractéristiques coopérant contre le retournement de la jante sous l'effet de la traction des rayons.

3. Jante selon la revendication 1, caractérisée en ce que sa section (21b) est symétrique par rapport à l'axe de section (Q) et la jante est formée de telle sorte qu'elle présente sur le côté contenant le plan médian (N) des centres de tous les trous de jante (12) un diamètre extérieur (D4) du bord de jante plus grand que le diamètre extérieur (D3) du bord de jante sur son côté opposé, avec pour résultat que sa section (21b) est asymétrique par rapport au plan médian (M) de la jante, cette asymétrie agissant contre le retournement de la jante par traction des rayons.

4. Jante selon la revendication 1 ou 2, caractérisée en ce que sa section (31, 41) est asymétrique par rapport à l'axe de section (Q) et possède un fond de jante simple, qui présente pour chaque manchon de rayon (10, 11) un seul trou de jante (12) sensiblement orienté dans le sens radial.

5. Jante selon la revendication 1 ou 4, caractérisée en ce que sa section (31) présente sur le coté de l'axe de section (Q) qui contient le plan médian (N) des centres de tous les trous de jante (12) un bord de jante (33) plus épais que le côté opposé.

6. Jante selon l'une des revendications 1, 4 ou 5, caractérisée en ce que sa section (41) présente sur le côté de l'axe de section (Q) contenant le plan médian (N) des centres de tous les trous de jante (12) un fond de jante (42) plus épais que sur le côté opposé.

7. Jante selon la revendication 1 ou 2, caractérisée en ce que sa section (51, 61, 71) est asymétrique par rapport à l'axe de section (Q) et possède un double fond de jante, le fond de jante intérieur dans te sens radial (62, 72) présentant pour chaque manchon de rayon (10, 11) un trou de jante (12, 12a, 12b) orienté sensiblement dans le sens radial et d'un diamètre plus petit que celui de la tête de manchon (78), et le fond de jante extérieur dans le sens radial (63, 73) présentant pour chaque manchon de rayon (10, 11) un trou extérieur de jante (79) d'un diamètre plus grand que celui de la tête de manchon (78), un espace intérieur (53, 64) étant compris entre les deux fonds de jante (62, 63 ; 72, 73).

8. Jante selon la revendication 7, caractérisée en ce que la ligne de contour extérieure (52) de la section (51) faisant le tour de toute sa section (51) est symétrique par rapport à l'axe de section (Q) et des épaississements des parois de la section (51) sont réalisés dans la zone de l'espace intérieur (53) de la jante dans la section (51), principalement sur le côté de l'axe de section (Q) contenant le plan médian (N) des centres de tous les trous de jante (12), de sorte que la ligne de contour (54) de la section de l'espace intérieur (53) faisant le tour de la section de l'espace intérieur (53) est asymétrique par rapport a l'axe de section (Q).

9. Jante selon la revendication 7, caractérisée en ce que dans la ligne de contour extérieure de sa section (61), la ligne de contour extérieure (62a) du fond de jante intérieur dans le sens radial (62) est asymétrique par rapport à l'axe de section (Q), mais l'ensemble du secteur restant de la ligne de contour extérieure de la section (61) faisant le tour de la section (61) est symétrique par rapport à l'axe de section (Q).

10. Jante selon la revendication 7, caractérisée en ce que le secteur de la ligne de contour extérieure (76) de sa section (71) qui contient les lignes de contour des deux bords de jante (74, 75) et du fond de jante intérieur dans le sens radial (72) et s'étend sans interruption du point le plus extérieur radialement sur un côté de la section (71) au point le plus extérieur radialement sur le côté opposé (71) est asymétrique par rapport à l'axe de section (Q).

11. Jante selon la revendication 2 et selon l'une des revendications 7 à 10, caractérisée en ce que dans sa section (51, 61, 71, 91), sur la côté de l'axe de section (Q) contenant le plan médian (N) des centres de tous les trous de jante (12 ; 12a, 12b ; 12c), le fond de jante intérieur dans le sens radial (62, 72, 93) ou le fond de jante extérieur dans le sons radial (63, 73, 92) ou le bord de jante (65, 74, 97) est plus épais que sur le côté opposé de la section (51, 61, 71, 91) ou en ce que plusieurs des épaississements mentionnés ici sont combinés.

12. Jante selon la revendication 2 et selon l'une des revendications 4 à 11, caractérisée on ce que sa section (31, 41, 51, 61, 71, 91) est asymétrique par rapport à l'axe de section (Q) et la jante est conformée de telle sorte qu'elle présente sur le côté contenant le plan médian (N) des centres de tous les trous de jante (12; 12a, 12b ; 12c) un diamètre extérieur (D5) du bord de jante plus grand que sur le côté opposé (D6).

13. Jante selon la revendication 2 et selon l'une des revendications 4 à 12, caractérisée en ce que dans sa section (31, 41, 51, 61, 71, 91) sur le côté de l'axe de section (Q) contenant le plan médian (N) des centres de tous les trous de jante (12 ; 12a, 12b ; 12c), la surface de la section du matériau de la jante est plus grande que sur le côté opposé de la section (31, 41, 51, 61, 71, 91).

14. Jante selon l'une des revendication 7 ou 9 à 13, caractérisée en ce que sa section (61, 71, 91) possède un double fond de jante, un espace intérieur (64, 98) étant compris entre les deux fonds de jante (62, 63 ; 72, 73 ; 92, 93), et la surface de la section de l'espace intérieur (64) étant plus grande sur le côté de l'axe de section (Q) contenant le plan médian (N) des centres de tous les trous de jante (12 ; 12a, 12b ; 12c) que sur le côté opposé de la section (61, 71).

15. Jante selon l'une des revendications 2, 4, 6, 7, 9 à 14, caractérisée en ce que la hauteur radiale de sa section (41, 61, 71, 91) est plus grande sur le côté de l'axe de section (Q) contenant le plan médian (N) des centres de tous les trous de jante (12 ; 12a, 12b ; 12c), en mesurant dans le sens axial au centre de la moitié de section correspondante et parallèlement à l'axe de section (Q), que sur le côté opposé de la section (41, 61, 71, 91).

16. Jante selon l'une des revendications 1 à 15, caractérisée en ce qu'il est prévu dans le crochet (80) du bord de jante (74) situé le plus près des trous de jante (12) dans le sens de roulement de la jante aux emplacements des manchons de rayon (10, 11) des évidements (81) qui éliminent entièrement ou partiellement le crochet (80) du bord de la jante (74) à ces endroits.

17. Jante selon l'une des revendications 2 ou 9 à 16, caractérisée en ce que sa section (91) est asymétrique par rapport à l'axe de section (Q) et présente une bride de jante (94) orientée vers l'intérieur dans le sens radial, décalée latéralement par rapport à l'axe de section (Q), avec des trous de jante (12c) orientés sensiblement dans le sens axial, ces trous de jante (12c) servant à l'ancrage des rayons (8c, 9c) recourbés à l'extrémité approximativement à angle droit à l'aide de leurs têtes de rayon (95, 96).

18. Jante selon l'une des revendications 1 à 17, caractérisée en ce qu'elle est fabriquée dans un métal léger ou un alliage de métaux légers.

19. Roue à rayons arrière de bicyclette pourvue d'une jante selon l'une des revendications 1 à 18.

20. Bicyclette pourvue d'une roue arrière présentant une jante selon l'une des revendications 1 à 18.
